# EUROPÄISCHE PATENTSCHRIFT

(11) **EP 4 030 161 B1**
(45) Veröffentlichungstag und Bekanntmachung des Hinweises auf die Patenterteilung: **24.07.2024**
(21) Anmeldenummer: 22000027.7
(22) Anmeldetag: 03.04.2019
(51) Int. Cl.: G01M 13/005

(54) **VERFAHREN UND VORRICHTUNG ZUR ÜBERWACHUNG EINES WELLENDICHTRINGS**
METHOD AND DEVICE FOR MONITORING A SHAFT SEALING RING
PROCÉDÉ ET DISPOSITIF DE SURVEILLANCE D'UN JOINT D'ÉTANCHÉITÉ D'ARBRE

(30) Priorität: 23.04.2018 DE 102018003318
(43) Veröffentlichungstag der Anmeldung: 20.07.2022
(62) Teilanmeldung aus: 19717435.2
(73) Patentinhaber: SEW-EURODRIVE GmbH & Co. KG, 76646 Bruchsal (DE)
(72) Erfinder: Hüttinger, Alexander, D-75245 Neulingen (DE); Schütterle, Ingo, D-76646 Bruchsal (DE); Wöppermann, Markus, D-76307 Karlsbad (DE); Weisenburger, Julia, D-76669 Bad Schönborn (DE)

(56) Entgegenhaltungen:
- DE-C1- 10 113 591
- DE-U1- 29 909 737
- US-A- 3 176 497

## Beschreibung

Die Erfindung betrifft ein Verfahren und eine Vorrichtung zur Überwachung eines in einem zumindest teilweise mit Öl befüllten Kammergehäuse aufgenommenen, auf einem Wellenteil vorgesehenen Wellendichtrings.

Es ist allgemein bekannt, dass eine Prüfvorrichtung zum Prüfen eines Prüflings geeignet ausgeführt ist.

Aus der US 3 176 497 A ist als nächstliegender Stand der Technik eine Prüfvorrichtung für eine Dichtung bekannt.

Aus der US 5 814 717 A ist eine Öldichtungstestvorrichtung bekannt.

Aus der CN 101464203 A ist ein mechanisches Testsystem für Dichtungen bekannt.

Aus der CN 202049005 U ist eine Prüfvorrichtung für ein Reibungstestsystem bekannt.

Aus der CN 103630301 A ist eine Prüfvorrichtung für eine flüssigkeitsgeschmierte Dichtung bekannt.

Aus der DE 101 13 591 C1 ist eine Prüfeinrichtung zur Untersuchung des Verhaltens von Wellendichtsystemen bekannt.

Aus der DE 299 09 737 U1 ist eine Einrichtung zur Untersuchung des Reibungs- und Verschleißverhaltens von Wellendichtungen bekannt.

Der Erfindung liegt daher die Aufgabe zugrunde, eine Prüfvorrichtung zum Prüfen eines Wellendichtrings weiterzubilden.

Erfindungsgemäß wird die Aufgabe bei der Vorrichtung nach den in Anspruch 1 angegebenen Merkmalen gelöst.

Wichtige Merkmale der Erfindung bei der Vorrichtung, insbesondere Prüfvorrichtung, zur Überwachung eines in einem zumindest teilweise mit Öl befüllten Kammergehäuses aufgenommenen, auf einem Wellenteil vorgesehenen Wellendichtrings, aufweisend
- das Kammergehäuse,
- eine Welle,
- ein Lager, insbesondere Kugellager,
- die Bremse,
- ein Tragteil und
- das Wellenteil, insbesondere das von einem Motor drehbaren Wellenteil,

wobei der auf dem Wellenteil angeordnete, insbesondere laufende, Wellendichtring im Kammergehäuse aufgenommen ist,
wobei das Kammergehäuse drehfest mit der Welle verbunden ist, insbesondere einstückig mit der Welle ausgebildet ist,
wobei die Welle mittels des Lagers drehbar gelagert ist,
wobei das Lager aufgenommen ist im Tragteil,
wobei die Welle mit einer Bremse verbunden ist, welche direkt oder mittels eines Drehmomentstützteils am Tragteil abgestützt ist,
insbesondere wobei die Welle mit einem ersten Teil der Bremse drehfest verbunden ist und ein zweiter Teil der Bremse direkt oder mittels eines Drehmomentstützteils mit dem Tragteil verbunden ist.

Von Vorteil ist dabei, dass das Reibmoment des mittels des Wellendichtrings und des Öls auf der Lauffläche des Wellenteils gebildeten tribologischen Systems bestimmbar ist, insbesondere relativ zu den durch ein anderes Öl gebildeten tribologischen Systems. Es sind also Drehzahlverläufe mittels des Motors vorgebbar und dann bei einer konstanten Drehzahl ein Reibmoment bestimmbar, wobei dieses Messergebnis vergleichbar ist mit einer ebensolchen Messung unter Verwendung eines anderen Öls. Denn das Lager, insbesondere Kugellager, bewirkt ebenfalls einen Beitrag zum Messergebnis, der aber bei gleicher Drehzahl gleich ist.

Vorteiligerweise ist zur Bestimmung des Messwertes die Bremse lüftbar und somit das Kammergehäuse gegen die Federkraft drehbar gelagert bis Gleichgewicht der vom Federteil erzeugten Federkraft mit dem entsprechend dem Reibmoment auf dem Radialabstand der Verbindungsstelle des Federteils mit dem Hebelteil bewirkten Kraft bewirkt ist.

Zur Durchführung von insbesondere nicht konstanten Drehzahlverläufen ist die Bremse aktivierbar, so dass das Kammergehäuse ruhig bleibt und nicht in Schwingung gerät.

Die Bremse dient dann also zum insbesondere ruhigem Halten des Kammergehäuses. Bei einer vorteilhaften Ausgestaltung ist mit der Welle ein Hebelteil drehfest verbunden,
wobei das Hebelteil mit einer am Tragteil, insbesondere direkt oder über einen Haltebügel indirekt, abgestützten Rückstellfeder verbunden ist,
wobei ein Sensor zur Erfassung der Auslenkung des Hebelteils aus der Ruhelage der Rückstellfeder vorgesehen ist. Von Vorteil ist dabei, dass mittels des Hebelteils eine Hebelwirkung ausnutzbar ist, so dass das Federteil nur einen geringen Rückstellkraftbetrag aufbringen muss, da das Federteil auf einem großen Radialabstand zur Rotorwellenachse anordenbar ist. Außerdem ist ebenso eine Vergrößerung der vom Sensor zu erfassenden Auslenkungswegstrecke bewirkt.

Bei einer vorteilhaften Ausgestaltung ist im Kammergehäuse Öl vorhanden. Von Vorteil ist dabei, dass das tribologische System mit dem jeweiligen Öl untersuchbar ist.

Bei einer vorteilhaften Ausgestaltung weist das Kammergehäuse einen Druckluftanschluss auf. Von Vorteil ist dabei, dass das Öl mit einem Druck beaufschlagbar ist, so dass relativ zu der dem Öl abgewandten Seite des Wellendichtrings ein Überdruck vorgebbar ist und/oder gegenüber der dem Öl abgewandten Seite des Wellendichtrings ein Überdruck vorgebbar ist.

Bei einer vorteilhaften Ausgestaltung sind am radial äußeren Umfang des Kammergehäuses axial voneinander beabstandete in Umfangsrichtung umlaufende Ringnuten angeordnet,
wobei ein mit dem Tragteil verbundenes Gehäuse an seiner Innenseite in Umfangsrichtung umlaufende, axial voneinander beabstandete Ringnuten aufweist,
wobei eine jeweilige, mittels jeweils zwei zueinander nächstbenachbarten Ringnuten des Kammergehäuses gebildete Erhebung in eine jeweilige am Gehäuse ausgeformte Ringnut hineinragt,
insbesondere wobei eine jeweilige, mittels jeweils zwei zueinander nächstbenachbarten Ringnuten des Gehäuses gebildete Erhebung in eine jeweilige am Kammergehäuse ausgeformte Ringnut hineinragt,
so dass ein Luftspalt zwischen Gehäuse und Kammergehäuse vorgesehen ist, insbesondere wobei der Luftspalt in axialer Richtung sich erstreckt und in radialer Richtung beziehungsweise entgegen der radialen Richtung mäandrierend ausgebildet ist,
insbesondere wobei der Luftspalt in Umfangsrichtung drehsymmetrisch ist. Von Vorteil ist dabei, dass eine Erwärmung des Kammergehäuses berührungslos ermöglicht ist. Denn durch die Ringnuten ist eine große Oberfläche beim Kammergehäuse erzeugt, welcher eine entsprechende Innenoberfläche des Gehäuses gegenüber sich befindet, insbesondere mit einem Luftspalt konstanter radialer Breite. Auf diese Weise ist ein geringer thermischer Übergangswiderstand realisiert und somit ein Wärmestrom vom Gehäuse her oder umgekehrt berührungslos in das Kammergehäuse eintragbar. Mittels Temperierung des Gehäuses ist somit auch eine Temperierung des Kammergehäuses samt darin befindlichem Öl ermöglicht.

Bei einer vorteilhaften Ausgestaltung weist der erste Teil eine Außenverzahnung auf, auf welcher eine axial verschiebbare, aber drehfest mit der Welle verbundener Bremsbelagträger angeordnet ist,
wobei der zweite Teil der Bremse einen Magnetkörper aufweist, in welchem eine Ringwicklung aufgenommen ist, wobei eine Ankerscheibe axial verschiebbar, aber drehfest mit dem Magnetkörper verbunden axial zwischen Magnetkörper und Bremsbelagträger angeordnet ist,
so dass bei Bestromung der Ringwicklung die Ankerscheibe entgegen der von einem am Magnetkörper abgestützten Federteil erzeugten Federkraft zum Magnetkörper hingezogen wird, insbesondere also die Bremse gelüftet wird, und bei Nicht-Bestromung der Ringwicklung die Ankerscheibe von dem Federteil auf eine Bremsfläche gedrückt wird, die an einer Scheibe angeordnet ist, wobei die Scheibe insbesondere mittels Bolzen mit dem Magnetkörper verbunden ist, insbesondere die Bremse also einfällt. Von Vorteil ist dabei, dass die Bremse in einfacher Weise als Haltebremse ausführbar ist. Somit ist die Bremse bei Bestromung der Wicklung lüftbar und fällt mit Beendigung der Bestromung ein. Da die Welle drehfest mit dem Kammergehäuse verbunden ist, bewirkt ein Einfallen der Bremse auch ein Festhalten des Kammergehäuses.

Bei einer vorteilhaften Ausgestaltung sind am radial äußeren Umfang des Gehäuses insbesondere in Umfangsrichtung voneinander regelmäßig beabstandet Temperiereinheiten angeordnet. Von Vorteil ist dabei, dass eine gleichmäßige Verteilung der Temperiereinheiten ein entsprechend gleichmäßiges Temperieren bewirkt. Außerdem ist der radiale Außenumfang des Gehäuses, insbesondere dessen Schnittfläche mit einer Ebene, deren Normale parallel zur Rotorwellenachse ausgerichtet ist, als regelmäßiges Polygon ausführbar und somit eine hohe Festigkeit erreichbar. Die ebenen Flächen des Polygons ermöglichen eine große Kontaktfläche zum Thermoelektrisches Element hin. Somit ist eine hohe Effizienz der Temperiereinheiten erreichbar

Bei einer vorteilhaften Ausgestaltung weist jede Temperiereinheit ein elektrisch betreibbares Thermoelektrisches Element, insbesondere Peltier-Element, auf, wobei das Thermoelektrisches Element auf dem Gehäuse aufgebracht ist und auf der vom Gehäuse abgewandten Seite des Thermoelektrisches Elements ein Kühlkörper mit dem Peltier-Element verbunden ist, insbesondere wobei ein Lüfter am Kühlkörper, insbesondere auf der vom Thermoelektrisches Element abgewandten Seite des Kühlkörpers, angeordnet ist. Von Vorteil ist dabei, dass eine einfach handhabbare elektrische Regelung der Temperatur bewirkbar ist.

Bei einer vorteilhaften Ausgestaltung weist das Kammergehäuse ein Ölschauglas auf. Von Vorteil ist dabei, dass Ölverlust einfach erkennbar ist und/oder Unruhe, wie Schwingungsneigung, des Öls während Ausführens der Messung.

Bei einer vorteilhaften Ausgestaltung ist am Kammergehäuse ein Druckluftanschluss angeordnet insbesondere zum Zuführen von Druckluft in den vom Kammergehäuse umgebenen, zumindest teilweise mit Öl befüllten Innenraum. Von Vorteil ist dabei, dass das Öl im Innenraum des Kammergehäuses mit einem Druck beaufschlagbar ist.

Bei einer vorteilhaften Ausgestaltung ist am Kammergehäuse eine Entlüftungseinheit zum Entlüften des Kammergehäuses angeordnet. Von Vorteil ist dabei, dass der Druck in einfacher Weise reduzierbar ist.

Wichtige Merkmale bei dem Prüfstand mit zumindest einer vorgenannten Vorrichtung sind, dass
auf einer ein- oder mehrstückig ausgeführten Grundplatte ein Elektromotor angeordnet ist, dessen Rotorwelle mit dem Wellenteil der Vorrichtung drehfest verbunden ist,
wobei die Vorrichtung mittels einer axial gerichteten, also parallel zur Rotorwellenachse gerichteten Führungsschiene auf der Grundplatte verschiebbar angeordnet ist. Von Vorteil ist dabei, dass die Vorrichtung bei Abnutzung der Lauffläche des Wellenteils verschiebbar ist und somit eine unbenutzte neue Lauffläche dem Wellendichtring zur Verfügung stellbar ist. außerdem ist zu Montagezwecken die Vorrichtung verschiebbar und daher auch die Zugänglichkeit zum Wellendichtring verbesserbar.

Bei einer vorteilhaften Ausgestaltung ist an der Führungsschiene eine Feststellbremse zum Arretieren der Vorrichtung angeordnet,
insbesondere wobei der Prüfstand einen Rastbolzen aufweist. Von Vorteil ist dabei, dass zur Durchführung der Prüfung des Wellendichtrings die Feststellbremse arretierbar ist.

Bei einer vorteilhaften Ausgestaltung ist die Grundplatte über Gummipuffern auf einem Boden aufgestellt ist. Von Vorteil ist dabei, dass Schwingungen abdämpfbar sind und somit die Prüfung, insbesondere Bestimmung des Reibmoments, störungsarm ausführbar.

Bei einer vorteilhaften Ausgestaltung ist unterhalb des Wellenteils im vom Wellenteil axial überdeckten Bereich ein Auffangbehälter für Öl vorgesehen, insbesondere mit dem Tragteil der Vorrichtung verbunden ist. Von Vorteil ist dabei, dass der Umweltschutz verbessert ist.

Bei einer vorteilhaften Ausgestaltung umfasst der von einer transparenten Wellenabdeckung überdeckte axiale Bereich den vom Wellenteil und den von dem am Motor herausragenden Teilbereich der Rotorwelle überdeckten axialen Bereich. Von Vorteil ist dabei, dass die Prüfung optisch überwachbar ist und das drehende Teil mittels der transparenten Wellenabdeckung berührsicher angeordnet ist.

Wichtige Merkmale bei dem Verfahren zur Überwachung eines in einem zumindest teilweise mit Öl befüllten Kammergehäuse aufgenommenen, auf einem Wellenteil vorgesehenen, insbesondere angeordneten und/oder laufenden, Wellendichtrings, sind, dass das Kammergehäuse drehbar gelagert ist und mit einer Bremse, insbesondere mit einer elektromagnetisch betätigbaren Bremse, freigebbar oder sperrbar ist, insbesondere der mittels der drehbaren Lagerung bewirkte Drehfreiheitsgrad des Kammergehäuses freigebbar oder sperrbar ist,
insbesondere wobei das Öl in Berührung ist mit dem Wellendichtring,
wobei ein zeitlicher Drehzahlverlauf dem Wellenteil insbesondere relativ zum Wellendichtring zyklisch wiederkehrend vorgegeben wird,
wobei jeder Zyklus jeweils einen ersten Zeitabschnitt aufweist, währenddessen ein zeitabhängig veränderlicher Drehzahlverlauf vorgegeben wird, und einen darauffolgenden zweiten Zeitabschnitt, währenddessen der Drehzahlverlauf als konstante, nicht verschwindende Drehzahl vorgegeben wird und ein Reibmoment bestimmt wird.
Zur genauen Bestimmung eines Reibmoments eines auf einer Welle laufenden Wellendichtrings wäre eine konstante Drehzahl der Welle zur fehlerarmen oder störungsarmen Messwerterfassung vorteilhaft. Erfindungsgemäß werden aber zeitlich veränderliche Drehzahlverläufe für die Welle vorgegeben, insbesondere um eine schnelle Alterung des Wellendichtrings und somit eine Verkürzung der Prüflaufdauer zu erreichen. Dabei sind aber korrekte Messwerte für das Reibmoment nicht oder nur schlecht erfassbar. Durch die erfindungsgemäß zyklisch wiederkehrend ausgeführten konstanten Drehzahlverläufe in den jeweiligen zweiten Zeitabschnitten ist eine präzise Messwerterfassung vorteilhafterweise ermöglicht.

Bei einer vorteilhaften Ausgestaltung wird die Bremse im zweiten Zeitabschnitt geöffnet, insbesondere so, dass das Kammergehäuse freigegeben wird, und ein Reibmoment erfasst wird,
insbesondere wobei im ersten Zeitabschnitt die Bremse aktiviert wird, insbesondere so, dass das Kammergehäuse festgehalten wird, insbesondere und kein Reibmoment erfassbar ist. Von Vorteil ist dabei, dass im zweiten Zeitabschnitt infolge der konstanten Drehzahl die Bestimmung des Reibmoments hochgenau ermöglicht ist. Im ersten Zeitabschnitt hingegen werden zeitlich schnell veränderliche Drehzahlverläufe vorgegeben und daher ist eine Bestimmung des Reibmoments hierbei nicht möglich.

Bei einer vorteilhaften Ausgestaltung ist im ersten Zeitabschnitt die Drehzahl eine periodische Funktion der Zeit,
insbesondere wobei die Funktion eine Dreiecksfunktion ist, insbesondere also die Änderungsrate der Drehzahl bei der ansteigenden Flanke der Dreiecksfunktion betragsgleich ist zur Änderungsrate der Drehzahl bei der abfallenden Flanke der Dreiecksfunktion. Von Vorteil ist dabei, dass eine möglichst schnelle Abnutzung des Wellendichtrings erreichbar ist, da Drehzahländerungen und Drehrichtungsänderungen den hydrodynamischen Schmierfilm jeweils verändern beziehungsweise sogar kurzfristig zusammenbrechen lassen. Somit ist ein Verschleiß schnell und in definierter Weise erreichbar, wodurch die Dauer des Prüflaufs verringerbar ist. Auf diese Weise sind Vergleichsmessungen zwischen verschiedenen tribologischen Systemen ermöglicht. Beispielsweise sind verschiedene Öle mit dem
Wellendichtring austestbar. Der Verschleiß wäre dabei gleichschnell erreichbar, wenn die Öle keinen Einfluss hätten auf die Verschleißentstehung. Eine unterschiedliche Wirkung der Öle ist aber erfindungsgemäß schnell und einfach erkennbar.

Bei einer vorteilhaften Ausgestaltung wird jeweils im zweiten Zeitabschnitt, insbesondere jedes Zyklusses, die Schwankungsbreite eines zeitlichen Verlaufs des erfassten Reibmoments bestimmt und auf Überschreiten eines Schwellwertes überwacht wird,
insbesondere wobei nach Überschreiten des Schwellwertes eine Warnung angezeigt und/oder weitergeleitet wird. Von Vorteil ist dabei, dass ein kritischer Verschleiß in einfacher Weise bei kurzer Messzeit erkennbar ist. Es muss also nur über einen kurzen Zeitraum gemessen werden, insbesondere innerhalb eines einzigen der zwei Zeitabschnitt, insbesondere innerhalb eines einzigen der zweiten Zeitabschnitte. Die Schwankungsbreite der Messwerte ist dann als Maß für den Verschleiß einfach bestimmbar und verwendbar.

Bei einer vorteilhaften Ausgestaltung wird der zyklisch wiederkehrend erfasste Verlauf des Reibmoments, insbesondere nach Ablauf einer Anfangszeitdauer, auf ein unzulässig großes Maß an Abweichung von einem Wert überwacht,

insbesondere wobei nach unzulässig hoher Abweichung eine Warnung angezeigt und/oder weitergeleitet wird,
insbesondere wobei der Wert ein aus einem, insbesondere nach Ablauf der Anfangszeitdauer, zeitlichen Bereich des Verlaufs des Reibmoments gebildeter Mittelwert ist. Von Vorteil ist dabei, dass auf einer Langzeitskala die Verschleißentwicklung durch zu unzulässig starkes Abweichen von einem Wert erkennbar ist. Dabei wird der Verlauf des Reibmoments aus den Messwerten zusammengesetzt, die in den zweiten Zeitabschnitten erfasst wurden. Dabei sind die einzelnen zweiten Zeitabschnitte zeitlich jeweils voneinander beabstandet. Somit ist ein zeitlich langsames Driften des Reibmoments erkennbar und daraus ein Überschreiten eines kritischen Verschleißzustandes erkennbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Querschnitt durch eine Prüfvorrichtung eines Prüfstandes für einen Wellendichtring 13 gezeigt.
In der Figur 2 ist die Prüfvorrichtung in Schrägansicht dargestellt.
In der Figur 3 ist der zwei solche Prüfvorrichtungen aufweisende Prüfstand dargestellt.
In der Figur 4 ist ein Längsschnitt durch die Prüfvorrichtung dargestellt.
In der Figur 5 ist der Drehzahlverlauf eines erfindungsgemäßen Verfahrens, umfassend eine Prüfung des Wellendichtrings schematisch dargestellt.
In der Figur 6 sind für zwei verschiedene Öle bei jeweils baugleichem Wellendichtring die zeitlichen Verläufe (61, 62) des Reibmoments M_R in einem kurzen Zeitabschnitt mit hoher zeitlicher Auflösung dargestellt.
In der Figur 7 sind für zwei verschiedene Öle bei jeweils baugleichem Wellendichtring die zeitlichen Verläufe des Reibmoments M_R bei zunehmender Alterung des Wellendichtrings dargestellt.

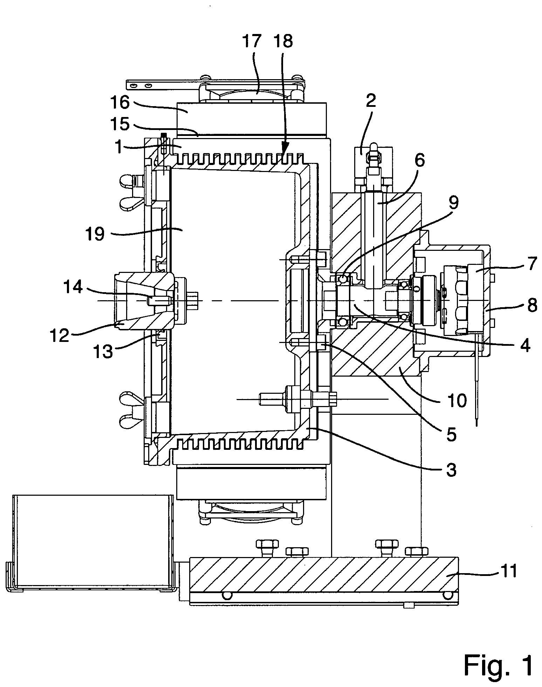

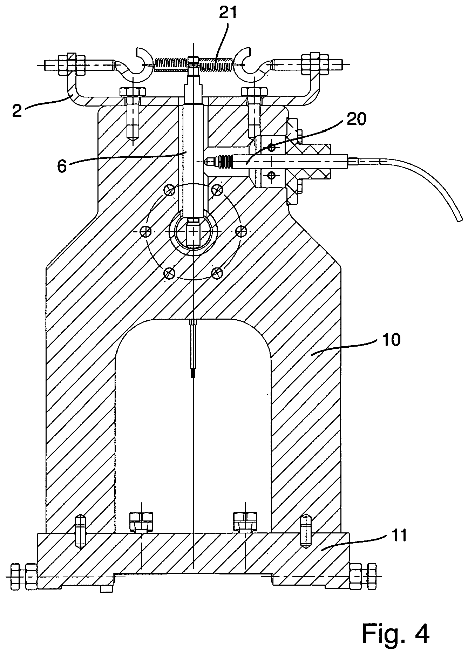

Wie in den Figuren 1 bis 4 dargestellt, weist der Prüfstand eine Grundplatte 37 auf, auf der ein Elektromotor 30 angeordnet ist, dessen Rotorwelle axial beidseitig herausgeführt ist und jeweils eine Prüfvorrichtung antreibt. Beide Prüfvorrichtungen dienen zur Prüfung eines Wellendichtrings, wobei ein Öl 19 vorgesehen ist. Somit wird also die Wechselwirkung des Öls mit dem Wellendichtring geprüft.

Die beiden Prüfvorrichtungen sind linear verfahrbar relativ zum Motor 30.

An jedem axialen Endbereich der Rotorwelle des Motors 30 ist jeweils ein Wellenteil 12 drehfest mit der Rotorwelle verbunden, insbesondere mittels einer jeweiligen Schraube 14.

Das Wellenteil weist an seinem äußeren Umfang eine insbesondere fein bearbeitete Lauffläche für den jeweiligen Wellendichtring 13 auf.

An der Grundplatte 37 ist eine Führungsschiene 33 angeordnet, so dass die Prüfvorrichtung mittels eines von ihr umfassten Schlittenteils 11 in axialer Richtung linear verschiebbar ist. Auf diese Weise ist nach einem jeweiligen Testlauf die Prüfvorrichtung verschiebbar und der Wellendichtring 13 auf einem anderen Bereich der Lauffläche betreibbar. Es sind also mehrere Testläufe mit jeweils unverbrauchten Laufflächen durchführbar.

Mittels einer Feststellbremse 36, insbesondere für die lineare relative Bewegung der Prüfvorrichtung zum Motor 30, ist die Prüfvorrichtung während des jeweiligen Testlaufs zur Grundplatte 37 hin arretierbar. Zum Zwecke des Verschiebens der Prüfvorrichtung ist die Bremse 36 lüftbar.

Der auf der Lauffläche angeordnete Wellendichtring 13 ist in einem Gehäuseteil eines Kammergehäuses 3 aufgenommen, insbesondere in einem Drehflanschteil des Kammergehäuses. Mittels des Gehäuseteils ist ein weiteres Gehäuseteil des Kammergehäuses 3 verschließbar, so dass im Innenraum Öl 19 einbringbar ist.

Das Kammergehäuse 3 der jeweiligen Prüfvorrichtung ist mit einer Welle 4 fest verbunden, insbesondere schraubverbunden mittels Schrauben 5.

Die Welle 4 ist mittels eines Lagers 9 in einem Tragteil 10 gelagert, dass entweder fest verbunden ist, insbesondere schweißverbunden ist, mit dem Schlittenteil 11 oder einstückig mit diesem ausgebildet ist.

Die Welle 4 ist an ihrem vom Motor 30 abgewandten axialen Endbereich mit einer elektromagnetisch betätigbaren Bremse 7, insbesondere einem drehbaren Teil der Bremse 7, verbunden. Der stationäre Teil der Bremse 7 ist mit einem Drehmomentstützteil 8 zum Ableiten von Drehmoment fest verbunden, wobei das Drehmomentstützteil 8 die Bremse gehäusebildend umgibt. Der stationäre Teil der Bremse 7 kann aber auch selbst als Bremsengehäuse ausgebildet sind.

Das Drehmomentstützteil 8 ist mit dem Tragteil 10 fest verbunden, insbesondere schraubverbunden.

Somit ist also das Kammergehäuse 3 schwenkbar angeordnet, wobei die Schwenkbewegung mittels der Bremse 8 unterbindbar ist, wenn diese eingefallen ist.

Zur Bestimmung des Reibmoments des Wellendichtrings 13 bei einer bestimmten Drehzahl des Wellenteils 12 wird die Bremse 8 jedoch gelüftet.

An der Welle 4 ist ein radial hervorragendes Hebelteil 6 drehfest verbunden.

Am Tragteil ist ein Haltebügel 2 fest verbunden, insbesondere angeschraubt, in welchem ein Federteil 21 gespannt gehalten ist. Vorzugsweise sind hierzu die beiden Enden des Federteils 21 von Haken 22 gehalten, die mit dem Haltebügel 2 verbunden sind. Im mittleren Bereich des Federteils 21 ist das Hebelteil 6 mit dem federteil 21 verbunden.

Vorzugsweise ist das Federteil 21 als Spiralfeder ausgeführt.

Bei verschwindender Drehzahl des Wellenteile 12 befindet sich das Hebelteil 6 in Ruhelage. Abhängig von der Drehzahl und der Drehrichtung wird das Hebelteil 6 ausgelenkt bis das von dem Federteil 21 über das Hebelteil 6 bewirkte Drehmoment dem Reibmoment des Wellendichtrings 13 auf der Lauffläche des Wellenteils 12 entspricht. Dabei ist das Lager 9 als Kugellager ausgeführt und bewirkt somit eine geringfügige Verfälschung der Auslenkung.

Die Auslenkung des Hebelteils 6 wird vom Sensor 20 in tangentialer Richtung gemessen. Der Sensor 20 ist dabei vorzugswese als induktiver Sensor ausgeführt, so dass keine wesentliche Störung des Messergebnisses von ihm bewirkt wird.

Somit ist also die vom Sensor 20 erfasste Auslenkung des Hebelteils 6 ein Maß für das vom Wellendichtring erzeugte Reibmoment.

Entsprechend der Auslenkung ist das Kammergehäuse 3 geschwenkt, also gedreht.

Das Kammergehäuse 3 weist an seinem radial äußeren Umfang Ringnuten auf. Die Ringnuten sind in Umfangsrichtung ununterbrochen ausgeführt. Axial zwischen jeweils zwei zueinander nächstbenachbarten Ringnuten ist jeweils eine ebenfalls in Umfangsrichtung insbesondere ununterbrochen umlaufende Erhebung vorgesehen.

Radial ist das Kammergehäuse 3 von einem Gehäuse 1 umgeben, welches mit dem Tragteil 10 und/oder Schlittenteil 11 verbunden, insbesondere schraubverbunden ist.

Das Gehäuse 1 ist hohl ausgeführt und weist an seinem Innenumfang Ringnuten auf, die ebenfalls in Umfangsrichtung umlaufen, so dass zwischen jeweils zwei zueinander nächstbenachbarten Ringnuten eine jeweilige nach radial innen hervorragende Erhebung ausgeformt ist.

Eine jeweilige der am Gehäuse 1 ausgeformten Erhebungen ragt in eine jeweilige Ringnut des Kammergehäuses 3 hinein. Ebenso ragt eine jeweilige am Kammergehäuse 3 ausgeformte Erhebung in eine jeweilige Ringnut des Gehäuses 1 hinein.

Auf diese Weise ist ein Luftspalt 18 gebildet, welcher in axialer Richtung mäanderförmig verläuft, insbesondere wobei der Mäander in radialer Richtung und in axialer Richtung sich erstreckt. Der Luftspalt 18 beansprucht ein Volumen wie ein Rotationskörper. Daher ist der mäanderartige Verlauf in einer Schnittebene, welche die Drehachse der Rotorwelle enthält unabhängig vom Umfangswinkel der Schnittebene.

Der Luftspalt 18 ist derart eng bemessen und mit einem derartigen Mäander ausgeführt, dass ein geringer Wärmeübergangswiderstand zwischen Kammergehäuse 3 und Gehäuse 1 besteht. Beide sind dabei aus Metall gefertigt.

Am radialen Außenumfang des Gehäuses 1 ist ein Thermoelektrisches Element, insbesondere Peltier-Element, aufgebracht, welches bei elektrischer Speisung einen Wärmestrom in radialer Richtung oder entgegen der radialen Richtung bewirkt.

Zur Erhöhung der Effizienz ist auf dem Thermoelektrisches Element 15 an seiner vom Gehäuse 1 abgewandten Seite ein Kühlkörper 16 angeordnet, auf dem ein Lüfter 17 angeordnet ist, so dass der Wärmestrom von der oder in die Umgebung geleitet wird.

Somit ist je nach der Polarität der elektrischen Versorgungsspannung des Thermoelektrisches Elements 15
ein Erwärmen oder ein Abkühlen des innerhalb des Kammergehäuses sich befindenden Öls 19 bewirkbar. Die Prüfung des Wellendichtrings 13 ist also bei verschiedenen Temperaturen durchführbar.

Die Temperatur ist somit auch bei Schwenkbewegung des Kammergehäuses 3 vom Thermoelektrisches Element 15 auf einen Temperaturwert einstellbar beziehungsweise auf einen Temperaturwert hinregelbar.

Vorzugsweise ist die Schraube 14 mit ihrem Gewindeabschnitt in eine Gewindebohrung der Rotorwelle eingeschraubt, so dass der Schraubenkopf der Schraube 14 auf eine axial zwischen dem Wellenteil 12 und dem Schraubenkopf angeordnete Lochscheibe drückt, welche wiederum auf das Wellenteil 12 drückt, deren konische Ausnehmung auf die an ihrem axialen Endbereich entsprechend konisch geformte Rotorwelle drückt.

Sobald die Drehrichtung oder die Drehzahl der Rotorwelle geändert wird, wird vorzugsweise die Bremse 8 aktiviert. Nur bei genügend langanhaltender konstanter Drehzahl der Rotorwelle wird die Bremse 8 gelüftet und das Reibmoment bestimmt.

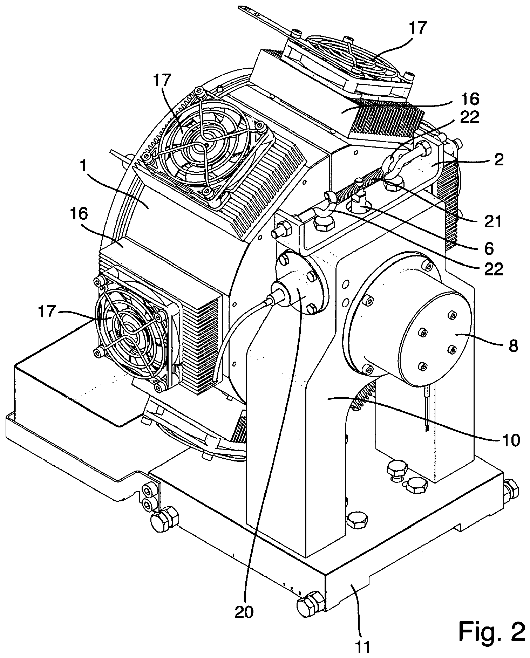

Wie in Figur 2 dargestellt, sind am Außenumfang des Gehäuses 1 solche Thermogeneratoren 15 in Umfangsrichtung voneinander regelmäßig beabstandet angeordnet, wobei auf jedem Thermogenerator ein Kühlkörper aufgesetzt ist und ebenfalls ein Lüfter.

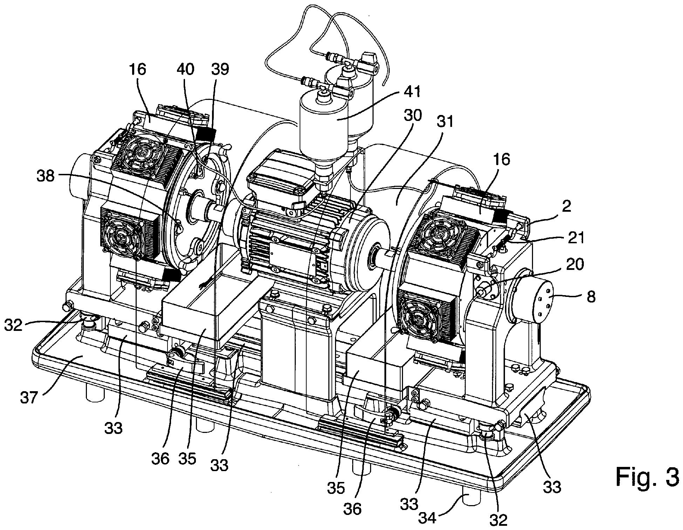

Wie in Figur 3 dargestellt, sind die beiden Prüfvorrichtungen vom selben Motor 30 angetrieben, da die Rotorwelle aus dem Motor axial beidseitig herausragt. Somit sind immer zwei Wellendichtringe gleichzeitig prüfbar.

Mittels den auf der Grundplatte 37 angeordneten Führungsschienen sind die Prüfvorrichtungen verschiebbar angeordnet, so dass durch Verschiebung der Prüfvorrichtungen relativ zum Motor mehrere unbenutzte Laufflächen der beiden Wellenteile 12 der Prüfvorrichtungen zur Verfügung stellbar sind.

Die Grundplatte 37 ist über Gummipuffer 34 aufgestellt, insbesondere so dass Schwingungen abgedämpft werden.

Mittels der auf der Grundplatte 37 als Feststellbremse ausgeführten Bremsen 36 ist die Prüfvorrichtung fixierbar.

Im Kammergehäuse 3 ist ein Ölschauglas 38 vorgesehen.

Eine transparente Abdeckung 31 überdeckt den axialen Bereich, welcher vom Wellenteil 12 und vom aus dem Motor 30 herausragenden Teil der Rotorwelle überdeckt wird. Die Abdeckung 31 umgibt diesen axialen Bereich in Umfangsrichtung bis zur Grundplatte 37.

Das Kammergehäuse 3 umgibt das Öl 19 dicht. Es ist also hermetisch abgeschlossen. Der für die Prüfung vorgesehene Druck, insbesondere Überdruck zum Umgebungsdruck, wird mittels Druckluft bewirkt, wobei die Druckluft zuerst durch einen Ölabscheider 41 und dann zum Druckluftanschluss 40 des jeweiligen Kammergehäuses geführt wird. Am Kammergehäuse 3 ist auch eine Entlüftung 39 zum Abbauen des Überdrucks vorgesehen.

Mittels an den Schlittenteilen 11 angeordneten Rastbolzen sind diskret vorgesehene Linearpositionen einstellbar.

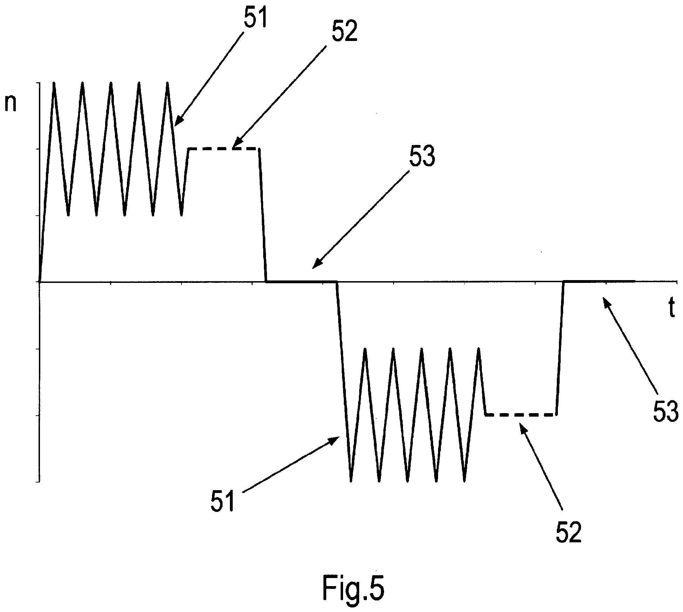

Wie in Figur 5 gezeigt, wird die Vorrichtung derart betrieben, dass in einem ersten Zeitabschnitt 51 der zeitliche Verlauf die Drehzahl n der Rotorwelle eine periodische Funktion der Zeit ist. Somit nimmt die Drehzahl im ersten Zeitabschnitt mehrmals zu und jeweils danach wieder ab.

Während des ersten Zeitabschnitts ist die Bremse aktiviert, so dass das Kammergehäuse 3 ruhig gehalten ist.

In einem auf den ersten Zeitabschnitt 51 folgenden zweiten Zeitabschnitt 52 wird die Bremse gelüftet und die sich einstellende Auslenkung des Hebelteils 6 bestimmt.

In einem dritten auf den zweiten Zeitabschnitt folgenden Zeitabschnitt 53 wird die Drehzahl auf Null gebracht und die Bremse dann wiederum aktiviert, so dass also die eingefallene Bremse das Kammergehäuse 3 festhält.

Sodann wird der beschriebene Ablauf mit umgekehrter Drehrichtung wiederholt, also wiederum in einem ersten Zeitabschnitt 51 die Drehzahl n periodisch verändert, danach in einem zweiten Zeitabschnitt 52 bei konstanter Messung und gelüfteter Bremse das Reibmoment M_R bestimmt und danach die Drehzahl n auf Null gebracht, wobei in diesem dritten Zeitabschnitt 53 die Bremse einfällt

Dies Abfolge der drei Zeitabschnitte (51, 52, 53) wird immer wiederkehrend mit jeweils umgekehrter Drehrichtung wiederholt.

Vorzugsweise dauert der erste Zeitabschnitt 51 jeweils zwischen 10 Sekunden und 1000 Sekunden.

Auf diese Weise ist eine möglichst schnelle Alterung des Wellendichtrings 13 erreicht, insbesondere zu einer Belastung mit nur konstanter Drehzahl.

Im dritten Zeitabschnitt 53 bricht der hydrodynamische Schmierfilm zusammen, die das Wellenteil 12 zum Stillstand kommt.

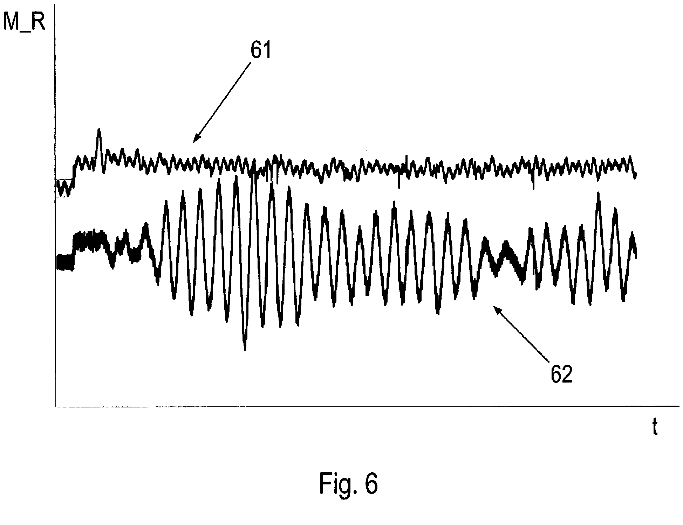

In der Figur 6 sind für zwei verschiedene Öle bei jeweils baugleichem Wellendichtring die zeitlichen Verläufe (61, 62) des Reibmoments M_R in einem kurzen Zeitabschnitt mit hoher zeitlicher Auflösung dargestellt. Dabei weist der Verlauf 61 eine geringere Schwankungsbreite auf als der Verlauf 62, obwohl die Drehzahl des Wellenteils 12 bei beiden Verläufen gleich groß gewählt ist. Somit ist klar erkennbar, dass der Verlauf 62 auf ein Verschleißen des Wellendichtrings 12 hindeutet.

Die zeitlichen Verläufe (61, 62) sind innerhalb des zweiten Zeitabschnitts 52 erfasst.

Somit wird also erfindungsgemäß bei jedem der zweiten Zweitabschnitte 52 der Verlauf des Reibmoments M_R erfasst und dann die Schwankungsbreite des zeitlichen Verlaufs (61, 62) auf Überschreiten eines unzulässigen Maßes an Abweichung von einem Schwellwert überwacht.

Vorzugsweise muss zur Bestimmung der Schwankungsbreite eine Zeitdauer zwischen 10 Millisekunden und 1 Sekunde aufgewendet werden. Somit ist die Bestimmung mit genügend hoher Sicherheit ausführbar.

Erfindungsgemäß wird also im zweiten Zeitabschnitt 52 jeweils die Schwankungsbreite in einem ersten Zeitbereich bestimmt und auf Überschreiten eines ersten Schwellwertes überwacht.

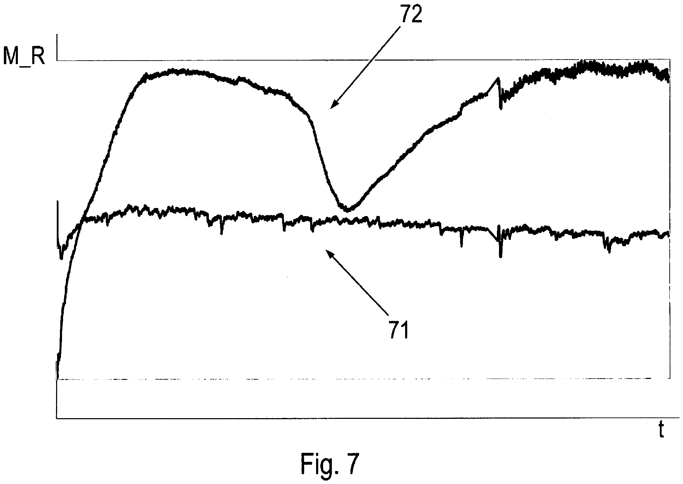

In der Figur 7 sind für zwei verschiedene Öle bei jeweils baugleichem Wellendichtring die zeitlichen Verläufe (71, 72) des Reibmoments M_R bei zunehmender Alterung des Wellendichtrings dargestellt.

Der Verlauf 71 ist nach einer anfänglichen Einlaufphase im Wesentlichen konstant. Der Verlauf 72 ist in gleicher Art und Weise bestimmt, worden. Jedoch ist der Verlauf 72 nicht konstant und sein Mittelwert ist höher als beim Verlauf 71. Somit gehört Verlauf 72 zu einem schlechteren Wellendichtring.

Erfindungsgemäß wird der im zweiten Zeitabschnitt 52 bestimmte Wert des Reibmoments M_R auf ein unzulässig hohes Abweichen von einem Sollwert überwacht. Vorzugsweise entspricht der Sollwert einem mittleren Wert des Reibmoments M_R, der in einem kurzen Zeitabschnitt bestimmt wird, welcher nach einer anfänglichen Einlaufphase angeordnet ist. Dabei ist die anfängliche Einlaufphase durch einen schnell veränderlichen Verlauf des Reibmoments M_R gekennzeichnet. Für diese Einlaufphase ist auch ein fester Zeitbereich vorgebbar. Somit ist es dann ermöglicht, nach diesem fest vorgegebenen Zeitbereich den Mittelwert des Reibmoments M_R in dem Zeitabschnitt zu bestimmen, beispielsweise dauert der Zeitabschnitt zwischen 10 Minuten und einer Stunde.

Danach wird das jeweils aktuell erfasste Teilmoment M_R auf Überschreiten eines zulässigen Maßes an Abweichung von dem Mittelwert überwacht. Es wird also überwacht, ob der aktuell erfasste Wert ein um den Mittelwert herum gelegtes Band, also einen den Mittelwert enthaltenden Wertebereich verlässt.

Erfindungsgemäß wird also zyklisch wiederkehrend die Bremse geöffnet und bei konstanter Drehzahl das Reibmoment M_R bestimmt. Die Schwankungsbreite nach Figur 6 ist während dieses zweiten Zeitabschnitts 52 bestimmbar. Die erfassten Werte des Reibmoments M_R aller zweiten Zeitabschnitte 52 werden als zeitlicher Verlauf überwacht auf Abweichung von dem gebildeten Mittelwert gemäß obiger Beschreibung nach Figur 7.

Somit wird der Verlauf des Reibmoments M_R erfindungsgemäß zeitlich hochaufgelöst und zeitlich niedriger aufgelöst überwacht auf ein Verschleißkennzeichen. Für die zeitlich hochaufgelöste Überwachung wird die Schwankungsbreite und für die andere, zeitlich niedriger aufgelöste Überwachung die Abweichung vom Mittelwert überwacht.

### Bezugszeichenliste

1 Gehäuse
2 Haltebügel
3 Kammergehäuse
4 Welle
5 Schraube
6 Hebelteil
7 Bremse, insbesondere elektrisch betätigbare Bremse
8 Drehmomentstützteil, insbesondere Drehmomentableitteil
9 Lager
10 Tragteil
11 Schlittenteil
12 Wellenteil
13 Wellendichtring
14 Schraube
15 Thermoelektrisches Element
16 Kühlkörper
17 Lüfter
18 Luftspalt
19 Öl
20 Wegsensor
21 Federteil
30 Elektromotor
31 transparente Abdeckung
32 Rastbolzen
33 Führungsschiene
34 Gummipuffer
35 Auffangbehälter
36 Linearbremse
37 Grundplatte
38 Ölschauglas
39 Entlüftung
40 Druckluftanschluss
41 Ölabscheider
51 erster Zeitabschnitt
52 zweiter Zeitabschnitt
53 dritter Zeitabschnitt

## Patentansprüche

1. Vorrichtung zur Überwachung eines in einem zumindest teilweise mit Öl befüllten Kammergehäuses (3) aufgenommenen, auf einem Wellenteil (12) vorgesehenen Wellendichtrings (13), aufweisend
- das Kammergehäuse (3),
- eine Welle (4),
- ein Lager (9), insbesondere Kugellager,
- die Bremse (7),
- ein Tragteil (10) und
- das Wellenteil (12), insbesondere das von einem Motor drehbaren Wellenteil (12),
wobei der auf dem Wellenteil (12) angeordnete, insbesondere laufende, Wellendichtring (13) im Kammergehäuse (3) aufgenommen ist,
wobei das Kammergehäuse (3) drehfest mit der Welle (4) verbunden ist, insbesondere einstückig mit der Welle (4) ausgebildet ist,
wobei die Welle (4) mittels des Lagers (9) drehbar gelagert ist,
wobei das Lager (9) aufgenommen ist im Tragteil (10),
wobei die Welle (4) mit einer Bremse (7) verbunden ist, welche direkt oder mittels eines Drehmomentstützteils (8) am Tragteil (10) abgestützt ist,
insbesondere wobei die Welle (4) mit einem ersten Teil der Bremse (7) drehfest verbunden ist und ein zweiter Teil der Bremse (7) direkt oder mittels eines Drehmomentstützteils (8) mit dem Tragteil (10) verbunden ist,
**dadurch gekennzeichnet, dass**
am radial äußeren Umfang des Kammergehäuses (3) axial voneinander beabstandete in Umfangsrichtung umlaufende Ringnuten angeordnet sind,
wobei ein mit dem Tragteil (10) verbundenes Gehäuse (1) an seiner Innenseite in Umfangsrichtung umlaufende, axial voneinander beabstandete Ringnuten aufweist,
wobei eine jeweilige, mittels jeweils zwei zueinander nächstbenachbarten Ringnuten des Kammergehäuses (3) gebildete Erhebung in eine jeweilige am Gehäuse (1) ausgeformte Ringnut hineinragt.

2. Vorrichtung nach Anspruch 1,
**dadurch gekennzeichnet, dass**
mit der Welle (4) ein Hebelteil (6) drehfest verbunden ist,
wobei das Hebelteil (6) mit einer am Tragteil (10), insbesondere direkt oder über einen Haltebügel (2) indirekt, abgestützten Rückstellfeder verbunden ist,
wobei ein Sensor zur Erfassung der Auslenkung des Hebelteils (6) aus der Ruhelage der Rückstellfeder vorgesehen ist.

3. Vorrichtung nach Anspruch 1 oder 2,
**dadurch gekennzeichnet, dass**
im Kammergehäuse (3) Öl (19) vorhanden ist,
und/oder dass
das Kammergehäuse (3) einen Druckluftanschluss (40) aufweist.

4. Vorrichtung nach einem der Ansprüche 1 bis 3,
**dadurch gekennzeichnet, dass**
eine jeweilige, mittels jeweils zwei zueinander nächstbenachbarten Ringnuten des Gehäuses (1) gebildete Erhebung in eine jeweilige am Kammergehäuse (3) ausgeformte Ringnut hineinragt,
so dass ein Luftspalt (18) zwischen Gehäuse (1) und Kammergehäuse (3) vorgesehen ist,
insbesondere wobei der Luftspalt (18) in axialer Richtung sich erstreckt und in radialer Richtung beziehungsweise entgegen der radialen Richtung mäandrierend ausgebildet ist,
insbesondere wobei der Luftspalt (18) in Umfangsrichtung drehsymmetrisch ist.

5. Vorrichtung nach einem der Ansprüche 1 bis 4,
**dadurch gekennzeichnet, dass**
der erste Teil eine Außenverzahnung aufweist, auf welcher eine axial verschiebbare, aber drehfest mit der Welle (4) verbundener Bremsbelagträger angeordnet ist,
wobei der zweite Teil der Bremse einen Magnetkörper aufweist, in welchem eine Ringwicklung aufgenommen ist, wobei eine Ankerscheibe axial verschiebbar, aber drehfest mit dem Magnetkörper verbunden axial zwischen Magnetkörper und Bremsbelagträger angeordnet ist,
so dass bei Bestromung der Ringwicklung die Ankerscheibe entgegen der von einem am Magnetkörper abgestützten Federteil (21) erzeugten Federkraft zum Magnetkörper hin gezogen wird, insbesondere also die Bremse gelüftet wird, und bei Nicht-Bestromung der Ringwicklung die Ankerscheibe von dem Federteil (21) auf eine Bremsfläche gedrückt wird, die an einer Scheibe angeordnet ist, wobei die Scheibe insbesondere mittels Bolzen mit dem Magnetkörper verbunden ist, insbesondere die Bremse also einfällt.

6. Vorrichtung nach einem der Ansprüche 1 bis 5,
**dadurch gekennzeichnet, dass**
am radial äußeren Umfang des Gehäuses (1) insbesondere in Umfangsrichtung voneinander regelmäßig beabstandet Temperiereinheiten angeordnet sind,
und/oder dass
jede Temperiereinheit ein elektrisch,betreibbares Thermoelektrisches Element (15), insbesondere Peltier-Element, aufweist, wobei das Thermoelektrisches Element (15) auf dem Gehäuse (1) aufgebracht ist und auf der vom Gehäuse (1) abgewandten Seite des Thermoelektrisches Elements ein Kühlkörper (16) mit dem Peltier-Element verbunden ist, insbesondere wobei ein Lüfter (17) am Kühlkörper (16), insbesondere auf der vom Thermoelektrisches Element (15) abgewandten Seite des Kühlkörpers (16), angeordnet ist.

7. Vorrichtung nach einem der Ansprüche 1 bis 6,
**dadurch gekennzeichnet, dass**
das Kammergehäuse (3) ein Ölschauglas (38) aufweist
und/oder dass
am Kammergehäuse (3) ein Druckluftanschluss (40) angeordnet ist insbesondere zum Zuführen von Druckluft in den vom Kammergehäuse (3) umgebenen, zumindest teilweise mit Öl befüllten Innenraum,
und/oder dass
am Kammergehäuse (3) eine Entlüftungseinheit zum Entlüften des Kammergehäuses (3) angeordnet ist.

8. Verfahren zur Überwachung eines in einem zumindest teilweise mit Öl (19) befüllten Kammergehäuse (3) aufgenommenen, auf einem Wellenteil (12) vorgesehenen, insbesondere angeordneten und/oder laufenden, Wellendichtrings (13), wobei das Verfahren mit einer Vorrichtung nach einem der Ansprüche 1 bis 7 ausgeführt wird,
wobei das Kammergehäuse (3) drehbar gelagert ist und mit einer Bremse (7), insbesondere mit einer elektromagnetisch betätigbaren Bremse (7), freigebbar oder sperrbar ist, insbesondere der mittels der drehbaren Lagerung bewirkte Drehfreiheitsgrad des Kammergehäuses (3) freigebbar oder sperrbar ist,
insbesondere wobei das Öl (19) in Berührung ist mit dem Wellendichtring (13),
wobei ein zeitlicher Drehzahlverlauf dem Wellenteil (12) insbesondere relativ zum Wellendichtring (13) zyklisch wiederkehrend vorgegeben wird,
wobei jeder Zyklus jeweils einen ersten Zeitabschnitt aufweist, währenddessen ein zeitabhängig veränderlicher Drehzahlverlauf vorgegeben wird, und einen darauffolgenden zweiten Zeitabschnitt, währenddessen der Drehzahlverlauf als konstante, nicht verschwindende Drehzahl vorgegeben wird und ein Reibmoment bestimmt wird,
**dadurch gekennzeichnet, dass**
jeweils im zweiten Zeitabschnitt, insbesondere jedes Zyklusses, die Schwankungsbreite eines zeitlichen Verlaufs des erfassten Reibmoments bestimmt und auf Überschreiten eines Schwellwertes überwacht wird.

9. Verfahren nach Anspruch 8,
**dadurch gekennzeichnet, dass**
im zweiten Zeitabschnitt die Bremse (7) geöffnet, insbesondere so, dass das Kammergehäuse (3) freigegeben wird, und ein Reibmoment erfasst wird,
insbesondere wobei im ersten Zeitabschnitt die Bremse (7) aktiviert wird, insbesondere so, dass das Kammergehäuse (3) festgehalten wird, insbesondere und kein Reibmoment erfassbar ist.

10. Verfahren nach mindestens einem der vorangegangenen Ansprüche 8 oder 9,
**dadurch gekennzeichnet, dass**
im ersten Zeitabschnitt die Drehzahl eine periodische Funktion der Zeit ist,
insbesondere wobei die Funktion eine Dreiecksfunktion ist, insbesondere also die Änderungsrate der Drehzahl bei der ansteigenden Flanke der Dreiecksfunktion betragsgleich ist zur Änderungsrate der Drehzahl bei der abfallenden Flanke der Dreiecksfunktion.

11. Verfahren nach mindestens einem der vorangegangenen Ansprüche 8 bis 10,
**dadurch gekennzeichnet, dass**
nach Überschreiten des Schwellwertes eine Warnung angezeigt und/oder weitergeleitet wird.

12. Verfahren nach mindestens einem der vorangegangenen Ansprüche 8 bis 11,
**dadurch gekennzeichnet, dass**
der zyklisch wiederkehrend erfasste Verlauf des Reibmoments, insbesondere nach Ablauf einer Anfangszeitdauer, auf ein unzulässiges großes Maß an Abweichung von einem Wert überwacht wird,
insbesondere wobei nach unzulässig hoher Abweichung eine Warnung angezeigt und/oder weitergeleitet wird,
insbesondere wobei der Wert ein aus einem, insbesondere nach Ablauf der Anfangszeitdauer, zeitlichen Bereich des Verlaufs des Reibmoments gebildeter Mittelwert ist.

13. Prüfstand mit zumindest einer Vorrichtung nach einem der Ansprüche 1 bis 7,
**dadurch gekennzeichnet, dass**
auf einer insbesondere ein- oder mehrteilig ausgeführten Grundplatte (37) ein Elektromotor (30) angeordnet ist, dessen Rotorwelle mit dem Wellenteil (12) der Vorrichtung drehfest verbunden ist,
wobei die Vorrichtung mittels einer axial gerichteten, also parallel zur Rotorwellenachse gerichteten Führungsschiene (33) auf der Grundplatte (37) verschiebbar angeordnet ist.

14. Prüfstand nach Anspruch 13,
**dadurch gekennzeichnet, dass**
an der Führungsschiene (33) eine Feststellbremse zum Arretieren der Vorrichtung angeordnet ist,
insbesondere wobei der Prüfstand einen Rastbolzen (32) aufweist,
und/oder dass
die Grundplatte (37) über Gummipuffern (34) auf einem Boden aufgestellt ist,
und/oder dass
unterhalb des Wellenteils (12) im vom Wellenteil (12) axial überdeckten Bereich ein Auffangbehälter (35) für Öl vorgesehen ist, insbesondere mit dem Tragteil (10) der Vorrichtung verbunden ist,
und/oder dass
der von einer transparenten Wellenabdeckung überdeckte axiale Bereich den vom Wellenteil (12) und den von dem am Motor herausragenden Teilbereich der Rotorwelle überdeckten axialen Bereich umfasst.

## Claims

1. A device for monitoring a shaft sealing ring (13) which is received in a chamber housing (3) at least partially filled with oil and which is provided on a shaft part (12), having
- the chamber housing (3),
- a shaft (4),
- a bearing (9), in particular ball bearing,
- the brake (7),
- a supporting part (10) and
- the shaft part (12), in particular the shaft part (12) rotatable by a motor,
wherein the shaft sealing ring (13) arranged, in particular running, on the shaft part (12) is received in the chamber housing (3),
wherein the chamber housing (3) is connected to the shaft (4) in a rotationally-fixed manner, in particular is integral with the shaft (4),
wherein the shaft (4) is rotatably mounted by means of the bearing (9),
wherein the bearing (9) is received in the supporting part (10),
wherein the shaft (4) is connected to a brake (7) which is supported on the supporting part (10) directly or by means of a torque support part (8),
in particular wherein the shaft (4) is connected to a first part of the brake (7) in a rotationally-fixed manner and a second part of the brake (7) is connected to the supporting part (10) directly or by means of a torque support part (8),
**characterised in that**
annular grooves, encircling in a circumferential direction and axially spaced apart from one another, are arranged at the radially outer circumference of the chamber housing (3),
wherein a housing (1) connected to the supporting part (10) has annular grooves, encircling in a circumferential direction and axially spaced apart from one another, at its inner side,
wherein a respective protuberance, formed in each case by means of two next-adjacent annular grooves of the chamber housing (3), projects into a respective annular groove formed at the housing (1).

2. A device according to claim 1,
**characterised in that**
a lever part (6) is connected to the shaft (4) in a rotationally-fixed manner,
wherein the lever part (6) is connected to a return spring supported on the supporting part (10), in particular directly or indirectly via a holding clip (2),
wherein a sensor for detecting the deflection of the lever part (6) from the at rest position of the return spring is provided.

3. A device according to claim 1 or 2,
**characterised in that**
oil (19) is present in the chamber housing (3),
and/or **in that**
the chamber housing (3) has a compressed air connection (40).

4. A device according to any one of claims 1 to 3,
**characterised in that**
a respective protuberance formed in each case by means of two next-adjacent annular grooves of the housing (1) projects into a respective annular groove formed at the chamber housing (3),
so that an air gap (18) is provided between housing (1) and chamber housing (3),
in particular wherein the air gap (18) extends in an axial direction and is meandering in a radial direction or counter to the radial direction,
in particular wherein the air gap (18) is rotationally-symmetrical in a circumferential direction.

5. A device according to any one of claims 1 to 4,
**characterised in that**
the first part has external toothing on which there is arranged a brake pad carrier which is axially displaceable yet connected to the shaft (4) in a rotationally-fixed manner,
wherein the second part of the brake has a magnet body in which there is received a ring winding, wherein an armature plate is arranged axially between magnet body and brake pad carrier in a manner which is axially displaceable yet connected to the magnet body in a rotationally-fixed manner,
so that when current is supplied to the ring winding, the armature plate is drawn towards the magnet body against the spring force generated by a spring part (21) supported on the magnet body, in particular therefore the brake is released, and when current is not supplied to the ring winding, the armature plate is pressed onto a braking surface, arranged at a disc, by the spring part (21), wherein the disc is connected, in particular by means of bolts, to the magnet body, in particular the brake is therefore applied.

6. A device according to any one of claims 1 to 5,
**characterised in that**
temperature control units are arranged at the radially outer circumference of the housing (1), in particular regularly spaced apart from one another in a circumferential direction,
and/or **in that**
each temperature control unit has an electrically operable thermoelectric element (15), in particular Peltier element, wherein the thermoelectric element (15) is attached to the housing (1) and a cooling body (16) is connected to the Peltier element at that side of the thermoelectric element which is remote from the housing (1), in particular wherein a fan (17) is arranged on the cooling body (16), in particular at that side of the cooling body (16) which is remote from the thermoelectric element (15).

7. A device according to any one of claims 1 to 6,
**characterised in that**
the chamber housing (3) has an oil-gauge window (38),
and/or **in that**
a compressed air connection (40) is arranged at the chamber housing (3), in particular to feed compressed air into the interior space which is surrounded by the chamber housing (3) and which is at least partially filled with oil,
and/or **in that**
a deaeration unit for deaeration of the chamber housing (3) is arranged at the chamber housing (3).

8. A method for monitoring a shaft sealing ring (13) which is received in a chamber housing (3) at least partially filled with oil (19) and which is provided on a shaft part (12), in particular arranged and/or running thereon, wherein the method is carried out with a device according to any one of claims 1 to 7,
wherein the chamber housing (3) is rotatably mounted and can be released or blocked by means of a brake (7), in particular by means of an electromagnetically actuatable brake (7), in particular the rotational degree of freedom of the chamber housing (3), brought about by means of the rotatable mounting, can be released or blocked,
in particular wherein the oil (19) is in contact with the shaft sealing ring (13),
wherein a temporal rotational speed course is specified in a cyclically recurring manner to the shaft part (12), in particular relative to the shaft sealing ring (13),
wherein each cycle has in each case a first time period, during which there is specified a rotational speed course variable in a time-dependent manner, and a subsequent second time period, during which the rotational speed course is specified as a constant, non-zero rotational speed and a frictional torque is determined,
**characterised in that**
in each case in the second time period, in particular of each cycle, the fluctuation range of a temporal course of the detected frictional torque is determined and there is monitoring for the exceeding of a threshold value.

9. A method according to claim 8,
**characterised in that**
the brake (7) is opened in the second time period, in particular such that the chamber housing (3) is released, and a frictional torque is determined,
in particular wherein in the first time period, the brake (7) is activated, in particular in such a manner that the chamber housing (3) is held fast, in particular and no frictional torque can be detected.

10. A method according to at least one of the preceding claims 8 and 9,
**characterised in that**
the rotational speed is a periodic function of time in the first time period,
in particular wherein the function is a triangular function, in particular therefore the rate of change of the rotational speed in the case of the rising edge of the triangular function is equal in amount to the rate of change of the rotational speed in the case of the falling edge of the triangular function.

11. A method according to at least one of the preceding claims 8 to 10,
**characterised in that**
after the threshold value has been exceeded, a warning is displayed and/or forwarded.

12. A method according to at least one of the preceding claims 8 to 11,
**characterised in that**
the frictional torque course, detected in a cyclically recurring manner, is monitored for an impermissible, great amount of deviation from a value, in particular after an initial period of time has passed,
in particular wherein after impermissibly great deviation, a warning is displayed and/or forwarded,
in particular wherein the value is an average value formed from a time range of the course of the frictional torque, in particular after the initial period of time has passed.

13. A testing stand having at least one device according to any one of claims 1 to 7,
**characterised in that**
an electric motor (30) is arranged on an in particular one-part or multi-part base plate (37) and its rotor shaft is connected to the shaft part (12) of the device in a rotationally-fixed manner,
wherein the device is displaceably arranged on the base plate (37) by means of a guide rail (33) which is axially directed, therefore directed parallel to the rotor shaft axis.

14. A testing stand according to claim 13,
**characterised in that**
an immobilising brake for locking the device is arranged at the guide rail (33),
in particular wherein the testing stand has a locking bolt (32),
and/or **in that**
the base plate (37) is placed on the ground via rubber buffers (34),
and/or **in that**
a collecting container (35) for oil is provided below the shaft part (12), in the region covered axially by the shaft part (12), in particular is connected to the supporting part (10) of the device,
and/or **in that**
the axial region covered by a transparent shaft covering comprises the axial region covered by the shaft part (12) and the axial region covered by the rotor shaft partial region projecting at the motor.

## Revendications

1. Dispositif dévolu à la surveillance d'une bague (13) d'étanchement d'arbre, logée dans un carter (3) d'un compartiment au moins partiellement empli d'huile, et prévue sur une partie (12) d'un arbre, comprenant :
- ledit carter (3) du compartiment,
- un arbre (4),
- un palier (9), un roulement à billes en particulier,
- le frein (7),
- une partie de support (10) et
- la partie (12) de l'arbre, notamment la partie (12) dudit arbre pouvant être animée d'une rotation par un moteur,
sachant que la bague (13) d'étanchement de l'arbre, notamment mobile et disposée sur la partie (12) dudit arbre, est logée dans ledit carter (3) du compartiment,
lequel carter (3) du compartiment est relié à l'arbre (4) avec verrouillage rotatif, notamment réalisé d'un seul tenant avec ledit arbre (4),
ledit arbre (4) étant monté à rotation au moyen du palier (9),
lequel palier (9) est intégré dans la partie de support (10),
l'arbre étant relié à un frein (7) prenant appui sur ladite partie de support (10), directement ou au moyen d'une pièce (8) de support de couple de rotation,
sachant notamment que l'arbre (4) est relié à une première partie du frein (7), avec verrouillage rotatif, et qu'une seconde partie dudit frein (7) est reliée à ladite partie de support (10), directement ou au moyen d'une pièce (8) de support de couple de rotation,
**caractérisé par le fait que**
des rainures annulaires axialement espacées les unes des autres, s'entendant périphériquement dans la direction du pourtour, sont disposées sur le périmètre radialement extérieur du carter (3) du compartiment,
sachant qu'un compartiment (1) relié à la partie de support (10) est pourvu, à sa face intérieure, de rainures annulaires axialement espacées les unes des autres et s'entendant périphériquement dans la direction du pourtour,
sachant qu'un bossage respectif, formé à chaque fois au moyen de deux rainures annulaires du carter (3) du compartiment les plus voisines l'une de l'autre, fait saillie dans une rainure annulaire respective façonnée dans ledit compartiment (1).

2. Dispositif selon la revendication 1,
**caractérisé par le fait**
**qu'**une partie (6) formant levier est reliée à l'arbre (4) avec verrouillage rotatif,
laquelle partie (6) formant levier est reliée à un ressort de rappel prenant appui sur la partie de support (10), en particulier directement, ou indirectement par l'intermédiaire d'un étrier de retenue (2),
un capteur étant prévu pour détecter l'excursion pivotante de ladite partie (6), formant levier, depuis la position de repos dudit ressort de rappel.

3. Dispositif selon la revendication 1 ou 2,
**caractérisé par le fait que**
de l'huile (19) est présente dans le carter (3) du compartiment ;
et/ou **par le fait que**
ledit carter (3) du compartiment est muni d'un raccord (40) d'air comprimé.

4. Dispositif selon l'une des revendications 1 à 3,
**caractérisé par le fait**
**qu'**un bossage respectif, formé à chaque fois au moyen de deux rainures annulaires du compartiment (1) les plus voisines l'une de l'autre, fait saillie dans une rainure annulaire respective façonnée dans le carter (3) dudit compartiment,
de sorte qu'un entrefer (18) est prévu entre ledit compartiment (1) et ledit carter (3) du compartiment,
sachant, en particulier, que ledit entrefer (18) s'étend dans la direction axiale et est de réalisation sinueuse dans la direction radiale, respectivement en sens inverse de ladite direction radiale,
ledit entrefer (18) étant notamment symétrique en rotation dans la direction du pourtour.

5. Dispositif selon l'une des revendications 1 à 4,
**caractérisé par le fait que**
la première partie est nantie d'une denture extérieure sur laquelle est implanté un support de garniture de freinage apte à se déplacer axialement, mais relié à l'arbre (4) avec verrouillage rotatif,
la seconde partie du frein étant munie d'un corps magnétique dans lequel un enroulement annulaire est intégré, sachant qu'un disque d'induit apte à se déplacer axialement, mais relié audit corps magnétique avec verrouillage rotatif, est interposé axialement entre ledit corps magnétique et ledit support de garniture de freinage,
de sorte que, lorsque du courant circule dans l'enroulement annulaire, le disque d'induit est attiré vers le corps magnétique en opposition à la force élastique développée par une pièce élastique (21) prenant appui sur ledit corps magnétique, le frein étant notamment desserré en conséquence, et que, lorsqu'aucun courant ne circule dans ledit enroulement annulaire, ledit disque d'induit est pressé, par ladite pièce élastique (21), sur une surface de freinage située sur un disque, lequel disque est relié audit corps magnétique, au moyen de boulons en particulier, ledit frein étant notamment engagé en conséquence.

6. Dispositif selon l'une des revendications 1 à 5,
**caractérisé par le fait que**
des unités de régulation thermique, notamment placées à intervalles réguliers les unes des autres dans la direction du pourtour, sont disposées sur le périmètre radialement extérieur du compartiment (1) ;
et/ou **par le fait que**
chaque unité de régulation thermique est dotée d'un élément thermoélectrique (15) actionnable électriquement, en particulier d'un élément Peltier, sachant que ledit élément thermoélectrique (15) est appliqué sur le compartiment (1), et qu'un corps de refroidissement (16) est relié audit élément Peltier du côté dudit élément thermoélectrique qui pointe à l'opposé dudit compartiment (1), un ventilateur (17) étant notamment installé sur ledit corps de refroidissement (16), en particulier sur le côté dudit corps de refroidissement (16) qui pointe à l'opposé dudit élément thermoélectrique (15).

7. Dispositif selon l'une des revendications 1 à 6,
**caractérisé par le fait que**
le carter (3) du compartiment est équipé d'un regard d'huile (38) ;
et/ou **par le fait**
**qu'**un raccord (40) d'air comprimé est situé sur ledit carter (3) du compartiment, notamment en vue de délivrer de l'air comprimé dans l'espace interne ceinturé par ledit carter (3) du compartiment et au moins partiellement empli d'huile ;
et/ou **par le fait**
**qu'**une unité de ventilation est implantée sur ledit carter (3) du compartiment, en vue de ventiler ledit carter (3) du compartiment.

8. Procédé de surveillance d'une bague (13) d'étanchement d'arbre, logée dans un carter (3) d'un compartiment au moins partiellement empli d'huile (19), prévue sur une partie (12) d'un arbre sur laquelle elle est notamment disposée et/ou mobile, ledit procédé étant mis en oeuvre à l'aide d'un dispositif conforme à l'une des revendications 1 à 7,
sachant que le carter (3) du compartiment est monté à rotation et peut être libéré ou bloqué par un frein (7), en particulier un frein (7) actionnable électromagnétiquement, le degré de latitude rotatoire dudit carter (3) du compartiment, procuré au moyen du montage rotatif, pouvant notamment être autorisé ou bloqué,
sachant, en particulier, que l'huile (19) est en contact avec la bague (13) d'étanchement de l'arbre,
sachant qu'un profil temporel de vitesse angulaire est préétabli cycliquement de façon récurrente à l'adresse de la partie (12) de l'arbre, notamment par rapport à ladite bague (13) d'étanchement dudit arbre,
chaque cycle présentant, respectivement, une première période durant laquelle est préétabli un profil de vitesse angulaire variable en fonction du temps, et une seconde période successive durant laquelle ledit profil de vitesse angulaire est préétabli en tant que vitesse angulaire constante, non évanescente, et un couple de frottement est déterminé,
**caractérisé par le fait que**,
durant la seconde période respective de chaque cycle, en particulier, la marge de fluctuation d'un profil temporel du couple de frottement détecté est déterminée et est surveillée quant au dépassement d'une valeur de seuil.

9. Procédé selon la revendication 8,
**caractérisé par le fait que**
le frein (7) est ouvert, durant la seconde période, en particulier de façon telle que le carter (3) du compartiment soit libéré et qu'un couple de frottement soit détecté,
sachant notamment que ledit frein (7) est activé, durant la première période, en particulier de façon telle que ledit carter (3) du compartiment soit fermement maintenu et qu'aucun couple de frottement ne puisse être détecté en particulier.

10. Procédé selon au moins l'une des revendications 8 ou 9 précédentes,
**caractérisé par le fait que**
la vitesse angulaire est une fonction périodique du temps, durant la première période,
ladite fonction étant notamment une fonction triangulaire, à savoir, en particulier, que le taux de variation de la vitesse angulaire présente, sur le flanc ascendant de la fonction triangulaire, une valeur égale à celle du taux de variation de la vitesse angulaire sur le flanc descendant de ladite fonction triangulaire.

11. Procédé selon au moins l'une des revendications 8 à 10 précédentes,
**caractérisé par le fait**
**qu'**une alerte est affichée et/ou transmise après dépassement de la valeur de seuil.

12. Procédé selon au moins l'une des revendications 8 à 11 précédentes,
**caractérisé par le fait que**
le profil du couple de frottement détecté cycliquement de façon récurrente est surveillé, en particulier après expiration d'une durée initiale, pour déceler un écart dont le critère estimatif est intolérablement grand par rapport à une valeur,
une alerte étant notamment affichée et/ou transmise après un écart intolérablement grand,
sachant, en particulier, que ladite valeur est une valeur moyenne formée à partir d'une plage temporelle dudit profil du couple de frottement, notamment après expiration de ladite durée initiale.

13. Banc d'essai équipé d'au moins un dispositif conforme à l'une des revendications 1 à 7,
**caractérisé par le fait**
**qu'**un moteur électrique (30), dont l'arbre rotorique est relié avec verrouillage rotatif à la partie (12) de l'arbre du dispositif, est mis en place sur une plaque de semelle (37) notamment réalisée en une ou plusieurs partie(s),
ledit dispositif étant agencé avec faculté de déplacement sur ladite plaque de semelle (37) au moyen d'un rail de guidage (33) dirigé axialement, c'est-à-dire orienté parallèlement à l'axe dudit arbre rotorique.

14. Banc d'essai selon la revendication 13,
**caractérisé par le fait**
**qu'**un frein d'immobilisation, destiné à arrêter le dispositif, est implanté sur le rail de guidage (33),
ledit banc d'essai étant notamment muni d'un tenon crantable (32) ;
et/ou par le fait que
la plaque de semelle (37) est posée sur un sol par l'intermédiaire de patins (34) en caoutchouc ;
et/ou par le fait
**qu'**un récipient (35) collecteur d'huile, notamment relié à la partie de support (10) dudit dispositif, est prévu au-dessous de la partie (12) de l'arbre dans la zone couverte axialement par ladite partie (12) de l'arbre ;
et/ou par le fait que
la région axiale, couverte par une coiffe transparente de l'arbre, inclut la zone axiale couverte par ladite partie (12) de l'arbre et celle couverte par la région partielle de l'arbre rotorique qui fait saillie au-delà du moteur.
